Europäisches Patentamt

European Patent Office

Office européen des brevets

(19)

(11) Publication number: 0 349 900
A2

(12) EUROPEAN PATENT APPLICATION

(21) Application number: 89111830.9

(22) Date of filing: 29.06.89

(51) Int. Cl.⁴: G02F 1/133

(30) Priority: 04.07.88 JP 165071/88

(43) Date of publication of application:
10.01.90 Bulletin 90/02

(84) Designated Contracting States:
DE FR GB NL

(71) Applicant: Stanley Electric Co., Ltd.
9-13, Nakameguro 2-chome
Meguro-ku Tokyo 153(JP)

Applicant: Uchida, Tatsuo
16-13-42, Maruyama 1-chome
Tagajo-shi Miyagi-ken(JP)

(72) Inventor: Uchida, Tatsuo
1-16-13-42 Maruyama
Tagajo Miyagi(JP)
Inventor: Ariga, Kazuo
A304, 1809-3 Shimosakunobe
Takatsu Kawasaki(JP)
Inventor: Kuniyasu, Seiyu
1443-1-505 Suenaga
Takatsu Kawasaki(JP)

(74) Representative: Geyer, Ulrich F., Dr.
Dipl.-Phys. et al
WAGNER & GEYER Patentanwälte
Gewuerzmuehlstrasse 5 Postfach 246
D-8000 München 22(DE)

(54) Twisted nematic liquid crystal display device.

(57) A twisted nematic liquid crystal display device compensated for the anisotropy of the twisted nematic liquid crystal layer when oriented perpendicular to the substrate under an application of electric field by anisotropy compensating means comprising at least two anisotropic (e.g. uniaxial) films having their optic axes disposed to form a right angle in a plane parallel to the substrate to form an optically negative activity in the direction perpendicular to the substrate. This optically negative activity is so selected to compensate the positive optical anisotropy of the nematic liquid crystal when oriented perpendicular to the substrate in the presence of an electric field.

# TWISTED NEMATIC LIQUID CRYSTAL DISPLAY DEVICE

## BACKGROUND OF THE INVENTION

This invention relates to a liquid crystal display device, and more particularly to a twisted nematic liquid crystal display device in which compensation is made for the optical anisotropy of a twisted nematic liquid crystal molecules when oriented normal to the substrate under the application of an electric field.

The twisted nematic liquid crystal display device has been utilized and developed in various ways as liquid crystal display devices capable of presenting clear displays.

A typical twisted nematic liquid crystal display device comprises a twisted nematic liquid crystal cell disposed between a pair of crossed polarizers.

Twisted nematic liquid crystal molecules are oriented parallel to the substrate surface and twisted across the thickness of the layer in the absence of an electric field. Then, the incident light is allowed to transmit through the crossed polarizers by being rotated in the twisted liquid crystal cell to exhibit "bright" OFF state.

When, for example, an a.c. electric field is applied to the liquid crystal layer, the liquid crystal molecules change their orientations and are aligned parallel to the electric field. Then, the incident light first polarized by a polarizer is no longer rotated in the liquid crystal layer and hence is cut off by the crossed polarizer (analyzer) to exhibit "dark" ON state.

When a cell in the ON state is seen along a direction normal or orthogonal to the substrate, a substantially perfect dark state is obtained. However, with respect to the lights incident on the cell along directions considerably off-set from the normal to the substrate, a perfect dark state can no longer be obtained.

Therefore, the visual recognition range of observation angle is very narrow.

Generally, the most influensive factor for the grade of the display of the transmission type liquid crystal display device is contrast.

For increasing contrast, it is necessary to decrease the light leakage in the dark state as far as possible. Thus, if a sufficiently dark state cannot be obtained in directions off-set from the normal directions, as described above, the display grade should be extremely lowered.

## SUMMARY OF THE INVENTION

An object of this invention is to provide a twisted nematic liquid crystal display device having a wide visual recognition range of observation angle.

In accordance with an aspect of this invention, there is provided a twisted nematic liquid crystal display device in which anisotropy compensating means is inserted between a twisted nematic liquid crystal cell containing a twisted nematic liquid crystal layer and at least one of a pair of polarizers. In the anisotropy compensating means, at least two anisotropic films, such as uniaxial films, are disposed in a plane or planes parallel to the substrate, with their refractive index axes relatively rotated to make a right angle to establish a negative optical anisotropy in the direction normal to the substrate, which compensates for the optical anisotropy of the nematic liquid crystal molecules oriented perpendicular to the substrate under the application of an electric field, which is a positive anisotropy having an axis normal to the substrate.

When the nematic liquid crystal layer becomes a uniaxial anisotropic medium oriented normal to the substrate to establish a positive optical anisotropy under the application of an electric field, the negative optical anisotropy of the anisotropy compensating means compensates for the positive optical anisotropy of the liquid crystal layer, thereby reducing the leakage light in a finite observation angle region. Therefore, a liquid crystal display device of wide visual recognition range of observation angle can be provided.

## BRIEF DESCRIPTION OF THE DRAWINGS

Figs. 1A, 1B and 1C are cross-sectional views of three dispositions of liquid crystal display devices according to embodiments of this invention.

Figs. 2A and 2B are schematic perspective views for illustrating the operation of the liquid crystal display device as shown in Fig. 1A, wherein Fig. 2A illustrates an " OFF" state and Fig. 2B illustrates an "ON" state.

Figs. 3A to 3D are diagrams for illustrating the structure and the function of the anisotropy compensating means shown in Figs. 1A, 1B and 1C, wherein Fig. 3A is a diagram of parts, Fig. 3B illustrates the refractive index components of the parts, Fig.3C illustrates an assembled state for the embodiments of Figs. 1A and 1B, and Fig. 3D illustrates the composite refractive index ellipsoid of the anisotropy compensating means.

Fig. 4 is a schematic perspective view for illustrating the operation of the liquid crystal display device of Fig 1A in the ON state as shown in Fig.

2B, in which the liquid crystal layer and the anisotropy compensating means are shown by refractive index ellipsoids.

Fig. 5 is a graph showing the relation of the leakage light intensity I' with respect to the observation angle $\theta$ in the ON state of the liquid crystal display device shown in Figs. 2B and 4.

Fig. 6 is a plan view of a thin film transistor substrate to be used in the liquid crystal display device of Figs. 1A to 1C.

Figs. 7A, 7B and 7C show a liquid crystal display device according to the prior art, wherein Fig. 7A is a cross-sectional view, and Figs. 7B and 7C are schematic perspective views for illustrating the operation of the twisted nematic liquid crystal display device of Fig. 7A.

Fig.8 is a schematic perspective view of the prior art liquid crystal display device in the ON state as shown in Fig. 7C, wherein the liquid crystal layer is shown as a refractive index ellipsoid.

Fig. 9 is a graph of the leakage light vs. the observation angle in the prior art liquid crystal display device as shown in Figs. 7C and 8.

In the drawings, reference symbols 1 and 6 denote polarizers, 2 and 4 substrates, 3 a liquid crystal layer, $n_o$ refractive index of the liquid crystal layer for ordinary light ray, $n_e$ refractive index of the liquid crystal layer for extraordinary light ray, 11 and 16 polarizer plates (polarizers), 12 and 14 substrates, 13 a twisted nematic liquid cystal layer, 15 anisotropy compensating means, P1 and P2 axes of polarization in the polarizers, and $n_1'$, $n_2'$ and $n_3'$ composite refractive indices of anisotropy compensating means.

## DESCRIPTION OF PREFERRED EMBODIMENTS

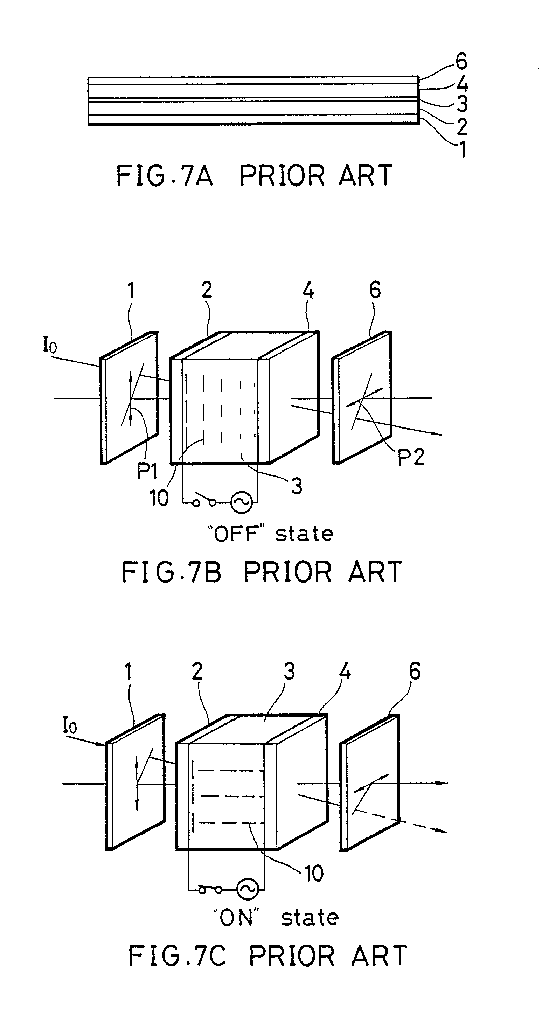

First, the prior art liquid crystal display device will be analyzed. Description will be made taking an example on a twisted nematic liquid crystal display (TNLCD) device, referring to Figs. 7A, 7B and 7C.

The twisted nematic liquid crystal display device has a structure in which a liquid crystal cell is sandwiched between a pair of crosed polarizer plates 1 and 6 as shown in Fig. 7A. The liquid cystal cell has a structure in which nematic liquid crystal molecules 10 in a layer 3 are twisted their axes and are sealed between a pair of substrates 2 and 4. Thin film transistors and display electrodes may be formed on one substrate and an opposing common electrode may be formed on the other substrate.

Figs. 7B and 7C respectively show the states of a cell of the twisted nematic liquid crystal display device in the OFF state which is in the absence of an electric field and in the ON state which is under the application of an electric field.

The liquid crystal display system illustrated in Figs. 7B and 7C is a positive type twisted nematic system (the cell becomes dark when a voltage is applied). Polarization axes P1 and P2 of a pair of polarizer plates 1 and 6 are orthogonally crossed. On the substrates 2 and 4, orientation structures are provided in directions parallel to the polarization axes P1 and P2.

In the OFF state as shown in Fig. 7B, liquid crystal molecules 10 are oriented parallel to the substrate surface. According to the orientation structure provided on each of the substrate surface, the long axes of the liquid crystal molecules are, as shown in Fig. 7B, oriented parallel to the orientation directions adjacent the substrates and are gradually twisted by 90 degrees across the thickness of the liquid crystal layer, from the vertical direction on the substrate 2 side to the horizontal direction on the substrate 4 side. An incident light going along the optical axis becomes a vertically linearly polarized light in the polarizer plate 1, enters the liquid crystal layer 3 from the side of the substrate 2, is gyrated its polarization according to the orientation of the liquid crystal molecules through the liquid crystal layer 3, emerges from the side of the substrate 4 as a horizontally linearly polarized light, and is injected to the polarizer plate (analyzer) 6. The polarizer plate 6 has a transverse (horizontal) polarization axis P2, and, hence allows the horizontally polarized light to pass through. Thus, the cell appears "bright".

In the ON state as shown in Fig. 7C, the liquid crystal molecules 10 are aligned their directions according to the applied electric field. Therefore, the incident light is not gyrated in the liquid crystal layer 3. The light vertically polarized by the polarizer 1 is blocked by the horizontal rear polarizer plate (analyzer) 6. Then, when the liquid crystal display device is observed from the direction normal to the liquid crystal display device, the cell appears "dark".

In the ON state which is expected to exhibit a perfectly dark state, a nearly perfect dark state is observed when seen along the direction normal to the cell, but a good dark state cannot be obtained for those light rays incident on the cell along directions considerably off-set from the normal direction.

The reason why the recognition range of incident or observation angle is narrow will be analyzed hereinbelow referring to Fig.8. In the ON state, nematic liquid crystal molecules are oriented by the electric field and are aligned along a direction orthogonal to the substrate. Then, the liquid crystal layer 3 exhibits uniaxial anisotropy, as shown by a refractive index ellipsoid of Fig. 8, in which the refractive index in the optic axis direction $n_e$ is larger than those in the directions orthogonal to the optic axis $n_o$ (i.e. positive optical anisotropy).

In Fig. 8,

$n_e$ = n∥,

$n_o$ = n⊥ , and

$n_e > n_o$

where n∥ and n⊥ represent the refractive indices along the long axis and the short axis of the liquid crystal molecule.

When ideal polarizers are used, the observed light intensity (emerging light intensity) I can be approximately represented as

$$I = (1/4) I_o \{1-\cos(2\pi\Delta R / \lambda)\} \sin (2\phi) \qquad (1)$$

where

$$\Delta R = [\{n_e n_o / (n_e^2 \cos^2\theta + n_o^2 \sin^2\theta)^{\frac{1}{2}}\} - n_o] d / \cos\theta$$

Here, $\Delta R$ is a quantity called retardation, $\lambda$ is the wavelength of light, d is the thickness of the liquid crystal layer, $I_o$ the intensity of the incident light, and $\theta$ and $\phi$ are angles as shown in Fig. 8.

From equation (1), it can be seen that the amount of leakage light varies in accordance with the quantity $\Delta R$.

As an example, a liquid crystal material named ZLI-1701 available from Merk Inc. has n∥ = 1.6 and n⊥ = 1.5. A case of $\phi$ = 45 °, n∥ = 1.6 , n⊥ = 1.5, d = 10 $\mu$m, and $\lambda$ = 550 nm will be considered. The retardation $\Delta R$ equals zero if $\theta$ = 0 ° (this direction coincides with the normal of the substrate) and equation (1) leads to

$I (\theta = 0 °) = 0$.

In case of $\theta$ = 30 °, however, equation (1) with corresponding parameter values leads to

$I(\theta = 30 °) = 0.5 I_o$.

The relation between the observation direction ($\theta$) and the intensity of the emerging light (leakage light) as obtained in the above manner is plotted in Fig. 9. In Fig. 9, the abscissa represents the observation angle $\theta$ and the ordinate represents the emerging light quantity I. The emerging light quantity I rises around an angle $\theta$ of several degrees, increases from about 15 degrees, forms a peak of about 0.5 $I_o$ around 30 degrees, then decreases again and takes small values above about 40 degrees.

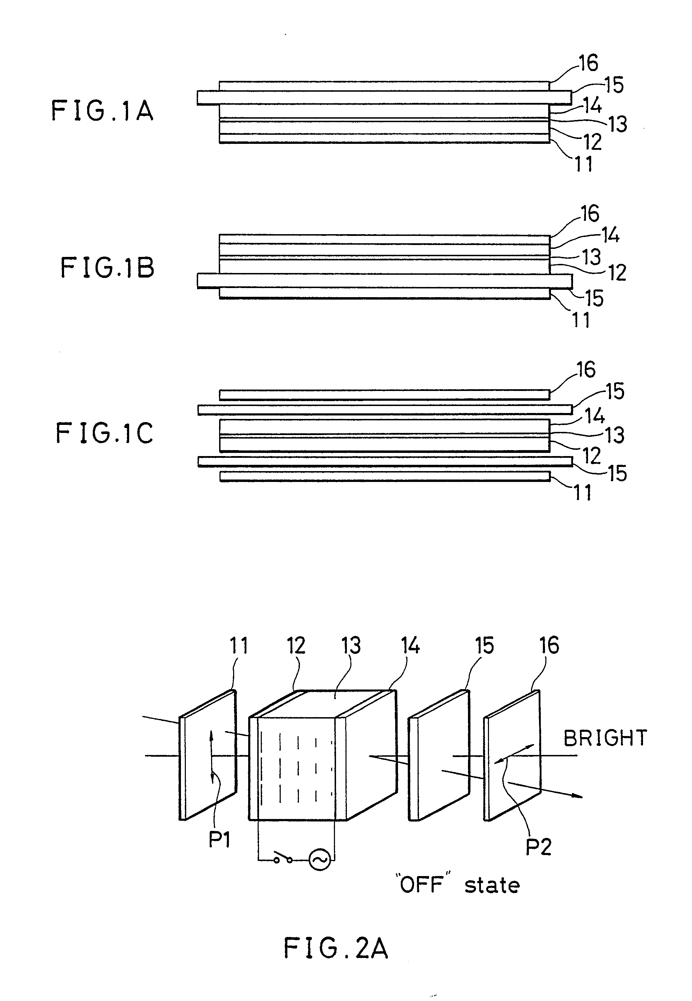

Now, a liquid crystal display device according to embodiments of this invention will be described in connection with Figs. 1A, 1B and 1C.

The thin film transistor twisted nematic liquid crystal display device has a structure in which a liquid crystal cell is sandwiched between a pair of crossed polarizer plates 11 and 16 as shown in Figs. 1A, 1B, or 1C. The liquid crystal cell has a structure in which a layer 13 of nematic liquid crystal is sealed between a pair of substrates 12 and 14, which are provided with different orientation directions to twist the nematic liquid crystal molecules.

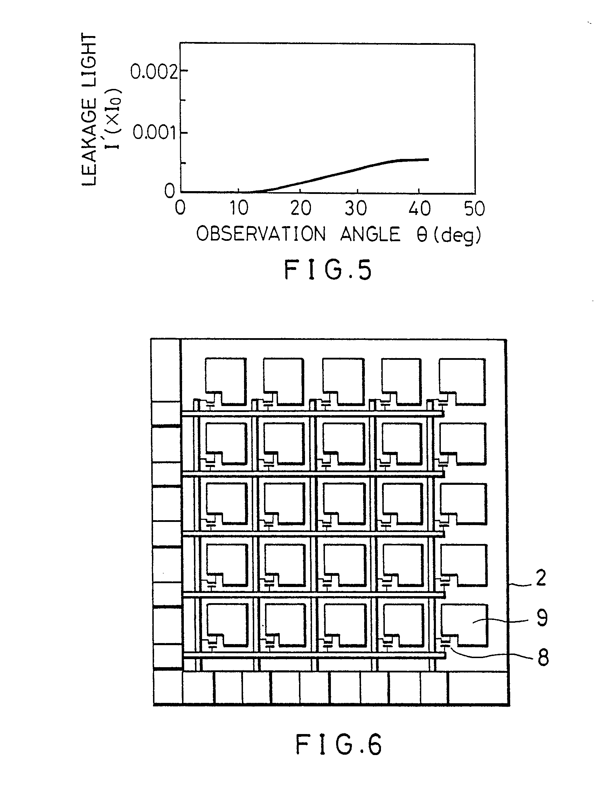

One of the substrates 12 and 14 has a structure as shown in Fig 6, in which thin film transistor 8 and display electrodes 9 are distributed on a substrate 2. On the other substrate 4, an opposing common electrode is formed.

Anisotropy compensating means 15 is inserted between the polarizer 16 and the substrate 14 as shown in Fig. 1A, or between the polarizer 11 and the substrate 12 as shown in Fig. 1B, or partly between the polarizer 16 and the substrate 14 and partly between the polarizer 11 and the substrate 12 as shown in Fig. 1C. In the embodiment of Fig. 1C, the total effect of the anisotropy compensating means is equivalent to that of Fig. 1A or 1B. Hereinbelow, description will be made mainly on the disposition of Fig. 1A. The operation in the other dispositions will be apparent for those skilled in the art.

The anisotropy compensating means 15 comprises at least two films, each having optical anisotropy, relatively rotated by about 90 degrees to exhibit, in total, a negative optical anisotropy in a direction normal to the substrate. The anisotropy of each film may be uniaxial or biaxial, as will be described later.

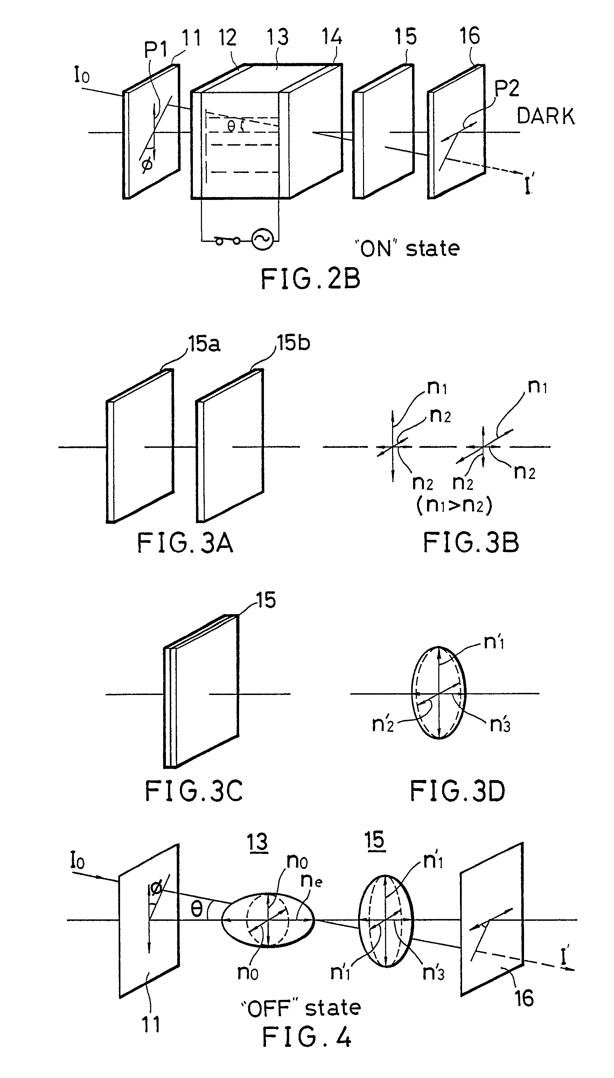

Figs. 2A and 2B respectively show the states of the display cell in the OFF state where no electric field is applied, and in the ON state where an electric field is applied. In the OFF state, the long axis directions of the nematic liquid crystal molecules are parallel to the substrate and twisted by 90 degrees in the planes parallel to the substrate, similar to the liquid crystal molecules in the prior art twisted nematic liquid crystal devices. Fig. 2A shows that molecules adjacent the substrate 12 are vertically aligned, while those adjacent the substrate 14 are horizontally aligned. The light vertically polarized by the polarizer 11 is rotated in the twisted nematic liquid crystal layer 13 and allowed to pass through the analyzer 16. In the ON state as shown in Fig. 2B, the liquid crystal molecules are directed normal to the substrate and do not gyrate the light polarization. Thus, the incident light is first vertically polarized by the polarizer 11 and then is blocked by the analyzer 16. Namely, the liquid crystal cell is "bright" in the OFF state, and is "dark" in the ON state.

The anisotropy compensating means 15 is a combination of, for example, two uniaxial films 15a and 15b, each disposed in a plane parallel to the substrate and having optical anisotropy, relatively rotated by 90 degrees about the optic axis of the liquid crystal display device. As shown in Fig. 3B, the main axis of the refractive index $n_1$ is in the plane of the sheet and has a larger value than those for other two axes $n_2$. The two sheets may be stacked into a unitary body as shown in Fig. 3C. Here, let us assume that the films 15a and 15b have the same characteristics and have the refractive indices as shown in Fig. 3B, the effective refractive indices of the composite anisotropy compensating means 15 in the form of two separate sheets or in the form of a laminar film composed of two sheets of uniaxial films become, as shown in Fig. 3D,

$n_1' = n_2' = ( n1 + n2 ) / 2$, and

$n_3' = n_2$.

Therefore, the anisotropy compensating means 15 is uniaxial parallel to the optic axis as shown in Fig. 3D, with the relation

$n_1' = n_2' > n_3'$.

Namely, there is formed optically negative refractive index ellipsoid (negative optical activity).

Meanwhile, it will be obvious for those silled in the art that an optically negative refractive index ellipsoid can also be produced by combining two sheets of biaxial films, or by combining more than two uniaxial or biaxial anisotropic sheets.

For example, when the biaxial film has refractive indices $n_1 > n_2 > n_3$, a combination of two sheets of such biaxial films with axes $n_1$ and $n_2$ interchanged will have the refractive indices $n_1'$, $n_2'$, and $n_3'$ which satisfy $n_1' = n_2' = (n_1 + n_2)/2 > n_3$.

The optical system of the liquid crystal display cell in the ON state is shown in Fig. 4. In the figure, along the optic axis from the lefthand side to the righthand side, there are disposed the polarizer (polarizer plate) 11, the liquid crystal layer 13, the anisotropy compensating means 15 and the analyzer (polarizer plate) 16.

Here, letting

$n_e = n_\parallel$ (the refractive index along the long axis direction of the liquid crystal molecule),

$n_o = n_\perp$ (the refractive index along the short axis direction of the liquid crystal molecule),

$d$ : the thickness of the liquid crystal layer, and

$d'$ : the thickness of the sheets of uniaxial anisotropic film in the anisotropy compensating means,

the intensity of the emerging light $I'$ along a direction 45 degrees slanted from the vertical direction in a plane parallel to the substrate and $\theta$ slanted from the normal of the substrate (or the optic axis) can be approximately represented as

$I' = (1/4) I_o [1 - \cos\{2\pi(\Delta R + \Delta R')/\lambda\}] \sin(2\phi)$ (2),

where

$\Delta R = [\{n_e n_o / (n_e^2 \cos^2\theta + n_o^2 \sin^2\theta)^{\frac{1}{2}}\} - n_o] d / \cos\theta$,

$\Delta R' = [\{n_1' n_3' / (n_3'^2 \cos^2\theta + n_1'^2\sin^2\theta)^{\frac{1}{2}}\} - n_1'] d' / \cos\theta$.

When the properties of the anisotropy compensation means 15 are so selected to satisfy $\Delta R + \Delta R' = 0$ in equation (2), then it follows $I' = 0$.

Under these conditions, the leakage light in the ON state becomes zero at any observation directions. Therefore, display with high contrast in wide range of observation angle can be provided.

In equation (2), a condition for reducing $I'$ is approximately represented as

$(n_e - n_o) d + (n_3' - n_1') d' = 0$, (3).

which leads to

$(n_e - n_o) d + (n_2 - n_1) d'' = 0$

where $d''$ ( $= d'/2$ ) is the thickness of each sheet of film 15a or 15b.

For example, when a nematic liquid crystal material comprises ZLI-1701 available from Merk Inc., then

$n_e ( = n_\parallel) = 1.6$ and $n_o ( = n_\perp ) = 1.5$.

When the liquid crystal layer has a thickness (cell thickness) of $d = 10$ μm and if the uniaxial film constituting the anisotropy compensating means has $n_1 = 1.65$, and $n_2 = 1.64$, good performance will be provided from equation (3) by selecting the thickness $d''$ as

$d'' = ( 1.6 - 1.5) \times 10 / (1.65 - 1.64) = 100$ μm.

An example of such uniaxial film is a polyether-sulfone film appropriately elongated (pulled) uniaxially. Beside this material, an anisotropy compensating means having similar characteristics can be constituted with highly transparent plastic films such as polyethylene-terephthalate, polyetherimide, polyether-ether-ketone.

The relation between the observation direction and the intensity of leakage light $I'$ in the above-described case is shown in Fig. 5. In Fig. 5, the abscissa represents the angle of incidence $\theta$, and the ordinate represents the intensity of emerging light. Since the intensity of the emerging light (leakage light) is very small, the ordinate is expanded 10 times as compared to that of Fig. 9 which shows the prior art performance.

The intensity of the emerging light $I'$ slightly increases from about an angle of 15 degrees, but is still at most about 0.005 $I_o$ around 35-40 degrees. It is clearly seen that the leakage has been significantly reduced as compared to the prior art of Fig. 9 which shows a peak leakage of about 0.5 $I_o$ at about 42 degrees.

Although description has been made on the embodiments of this invention, it should not be interpreted in any restrictive meaning. For example, various alterations, modifications and/or combinations can be made within the scope of the appended claims.

## Claims

1. A twisted nematic liquid crystal display device comprising:
a twisted nematic liquid crystal cell including a pair of parallel substrates provided with electrodes and a nematic liquid crystal layer sandwiched between the pair of substrates, the liquid crystal molecules being twisted gradually from one substrate to the other substrate according to the orientation on the substrates by 80-100 degrees in the absence of electric field, and being oriented substantially orthogonal to the substrate when a voltage is applied between the electrodes, thereby exhibiting a positive optical anisotropy;

a pair of crossed polarizers sandwiching the twisted nematic liquid crystal cell and having polarization axes mutually crossing orthogonally; and

anisotropy compensating means disposed between the liquid crystal cell and at least one of the polarizers, including at least two sheets of anisotropic film, the optic axes of which are relatively rotated to make an angle o about 90 degrees in a plane or planes parallel to the substrate, and exhibiting, in total, a negative optical anisotropy with an axis along the normal of the substrate which compensates the positive optical anisotropy of the liquid crystal layer, when the liquid crystal molecules are oriented normal to the substrate under the application of an electric field.

2. A twisted nematic liquid crystal display device according to claim 1, wherein said at least two sheets of anisotropic film are optically uniaxial along a direction in the plane of sheet.

3. A twisted nematic liquid crystal display device according to claim 1, wherein said at least two sheets of anisotropic film are optically biaxial with an axis of the smallest refractive index oriented substantially normal to the plane of sheet.

4. A twisted nematic liquid crystal display device according to claim 1, wherein said at least two sheets of anisotropic film are assembled in a laminar structure.

5. A twisted nematic liquid crystal display device according to claim 2, wherein said at least two sheets of anisotropic film are formed of a material selected from the group consisting of polyethersulfone, polyethylene-terephthalate, polyether-imide, polyether-ether-ketone, and their combinations.

FIG.1A

FIG.1B

FIG.1C

BRIGHT

"OFF" state

FIG.2A

FIG.2B

"ON" state

FIG.3A

FIG.3B

$(n_1 > n_2)$

FIG.3C

FIG.3D

"OFF" state

FIG.4

FIG.5

FIG.6

FIG·7A PRIOR ART

FIG·7B PRIOR ART

"OFF" state

"ON" state

FIG.7C PRIOR ART